# EUROPEAN PATENT APPLICATION

(11) **EP 4 650 748 A1**
(43) Date of publication of application: **19.11.2025**
(21) Application number: 24176298.8
(22) Date of filing: 16.05.2024
(51) Int. Cl.: G01N 3/46

(54) **METHOD OF CARRYING OUT A SCRATCH TEST**

(71) Applicant: Anton Paar TriTec SA, 2035 Corcelles (CH)
(72) Inventor: ARAB POUR YAZDI, Mohammad, 25200 Montbéliard (FR); NOHAVA, Jiri, 2036 Cormondrèche (CH)
(74) Representative: Patentsmith SA

(57) **Abstract**

Method of carrying out a scratch test on a ductile metallic coating (7b) provided on a brittle substrate (7a) of a sample (7), said comprising the steps of:
- positioning a sample (7) on a sample stage (5) facing a wedge blade indenter (9) having a length dimension (L) perpendicular to an indentation axis (Z) which is less than a width of said ductile metallic coating (7b) considered perpendicular to a scratch direction (X), wherein said sample stage (5) is arranged to tilt about two mutually perpendicular axes of rotation which are each substantially perpendicular to said indentation axis (X), and wherein said ductile metallic coating (7b) is positioned so as to be substantially perpendicular to said indentation axis (Z);
- carrying out a preliminary scratch test on said sample (7) with said wedge blade indenter (9) under a first load applied to said sample parallel to said indentation axis (Z), said preliminary scratch test being carried out by relatively displacing said wedge blade indenter (9) with respect to said sample (7) in a scratch direction perpendicular to said length dimension (L) of said wedge blade indenter (9);
- observing the scratch thereby produced;
- if necessary, correcting the tilt of said sample stage (5) such that said ductile metallic coating (7b) is perpendicular to said indentation axis (Z);
- carrying out at least one main scratch test under a second load which is greater than said first load, while recording parameters relating to forces applied between said wedge blade indenter (9) and said sample (7) and to relative displacement of said wedge blade indenter (9) with respect to said sample (7);
- observing the scratch thereby produced and correlating said parameters with the observed scratch.

## Description

### Technical Field

The present invention relates to the field of materials testing. More particularly, it relates to a method of carrying out a scratch test on a ductile coating provided on a brittle substrate.

### State of the Art

There is an increasing demand for comprehensive characterization of adhesion of relatively soft and ductile metallic layers and multilayers on brittle substrates (materials with Vickers hardness higher than 600 HV such as: silicon, alumina, sapphire, glass etc.), particularly within the electronics and semiconductor industries, without causing damage to the substrates. Soft metallic layers (typically with a thickness between 10 and 200 nanometres) which are crucial for any conductive pathways on microchips such as gold (Au), platinum (Pt), copper (Cu), and silver (Ag), are known for their relatively high ductility (maximum ultimate tensile strength of 250 MPa and maximum elastic modulus of 180 GPa) which presents challenges during adhesion on brittle substrates.

Typically, a classic 90° peel test is carried out in order to measure the adhesion of the coating to the substrate. The 90° peel test generally measures the force needed to pull apart the bonded materials at a 90° angle. This test needs to apply to the coating at least one flexible or adhesive part, such as an adhesive tape, which can bend without breaking at a 90° angle. This test is able to determine the adhesion of coatings only by measuring the maximum force per width before a total failure occurs. However, this method lacks sufficient resolution when measuring adhesion of individual layers in a multilayer system and also risks damaging the fragile substrate. Furthermore, the delamination of coatings might not occur on the entire tape surface and a correct evaluation of adhesion therefore requires optical investigation of the damaged surface.

A conventional scratch method is particularly suitable for characterizing the adhesion properties of hard thin films and polymer coatings but it has severe limitations for testing ductile metallic coatings on hard substrates. Traditionally, nanoscratch methods utilize sphero-conical indenters that rapidly traverse the soft metallic layers, exerting significant stress on the substrate which often leads to substrate failure rather than failure at the interface between the substrate and the coating or between the layers themselves. Indeed, sometimes the underlying substrate is damaged without achieving delamination of the coating. Consequently, these failure mechanisms do not provide meaningful insights into the adhesion properties of the ductile coatings such as critical loads that indicate the load, at which an interfacial failure occurs.

US5696327 discloses micro-scratch testing using a wedge-shape indenter for separating a thin film from a substrate, the film being e.g. a relatively hard film of tungsten on silicon having a thermally-grown silicon dioxide adhesion layer, or ductile materials deposited on soft polymers, for example copper joined to PMDA-ODA polyimide. However, this method requires the preparation of specific samples, such that the width of the film less than the length of the wedge-shaped indenter. Furthermore, the lateral width of the indenter is of the order of 20 µm, with a horizontal surface of 0.7 µm, which is far too large to have sufficient resolution to investigate the adhesion of modern, ultra-thin metallic coatings or the individual layers of a multilayer ductile metallic coating provided on a hard substrate. Also, the method of this document requires ultra-precise adjustment of the cutting edge of the wedge, which is difficult to achieve.

US6502455 discloses a similar micro-scratch indenter, with a radius in the range of 0.1 mm to 3 mm, which is so large as to be entirely unsuitable for investigating the types of coatings concerned with the present invention, particularly in the case of multilayers where the adhesion of the sub-layers of the multilayers is desired to be measured. Indeed, the minimum radius of 0.1 mm is significantly greater than the total thickness of the ductile metallic layers envisaged.

The aim of the present invention is hence to at least partially overcome the above-mentioned drawbacks of the prior art, and thereby to measure coating adhesion of ductile metallic materials on brittle substrates, without the need for preparation of special samples, and particularly in the case of multilayers of said ductile metallic materials, where in certain cases individual sub-layer-to-sublayer delamination can be characterised if required.

### Disclosure of the Invention

More precisely, the invention relates to a method of carrying out a scratch test on a ductile metallic coating (typically with a maximum ultimate tensile strength of 250 MPa and a maximum elastic modulus of 180 GPa such as one or more layers of gold, silver, platinum, palladium, copper, or similar, and alloys thereof) provided on a brittle substrate (typically with a Vickers hardness of at least 600 HV such as silicon, gallium arsenide, gallium antimonide, glass, ceramics, glass-ceramics, silicon oxide, titanium oxide, tantalum oxide, silicon nitride, silicon carbide, alumina), as defined in claim 1, the sample comprising said brittle substrate provided with said ductile metal coating, which may be a single layer or a multilayer.

This method comprises the steps of:
- positioning a sample on a sample stage facing a wedge blade indenter having a length dimension perpendicular to an indentation axis (commonly referred to as the "Z" axis) which is less than a width of said ductile metallic coating considered perpendicular to a scratch direction (i.e. the direction in which the scratch will be made in the surface of the sample), wherein said sample stage is arranged to tilt about two mutually perpendicular axes of rotation which are each substantially perpendicular to said indentation axis (e.g. tilting around X and Y axes), and wherein a surface of said sample (i.e. the ductile metallic coating, notably its free surface) is positioned so as to be substantially perpendicular to said indentation axis;
- carrying out a preliminary scratch test on said sample with said wedge blade indenter under a first load applied to said sample parallel to said indentation axis, said preliminary scratch test being carried out by relatively displacing said wedge blade indenter with respect to said sample (i.e. by moving one or both of the wedge blade indenter and/or the sample) in a scratch direction perpendicular to said length dimension of said wedge blade indenter. It should be noted that the first load may be constant or varying;
- observing the scratch thereby produced, for instance with a microscope camera. It should be noted that the preliminary scratch test and the observation of the results may be repeated if desired, on a fresh area of ductile metallic coating;
- if necessary, i.e. if the observation concludes that the surface of the sample is not sufficiently perpendicular to the indentation axis, correcting the tilt of said sample stage by tilting it around one of more of the tilt axes, such that said ductile metallic coating is sufficiently perpendicular to said indentation axis within a required tolerance that will depend on the exact nature and thickness of the coating;
- carrying out at least one main scratch test, either on top of the preliminary scratch or on a fresh area of the ductile metallic coating, under a second load which is greater than said first load, while recording parameters relating to forces applied between said indenter and said sample and to relative displacement of said wedge blade indenter with respect to said sample, typically at least in the indentation direction and in the scratch direction. It should be noted that the second load may also be constant or varying, with a magnitude higher than that of the first load for a given point on the scratch and a maximum value that is higher than that of the first load. Preferably, the second load is monotonically increasing;
- observing the scratch thereby produced, e.g. with a microscope camera as before, and correlating said parameters with the observed scratch, either manually or automatically. This permits determining the critical points where one layer detaches.

As a result, adhesion of very thin ductile metallic coatings (with the thickness of several tens of nanometres, i.e. from 10 nm to 100 nm) on brittle substrates, and indeed the adhesion of individual sub-layers in the case in which the metallic coating is a multilayer, can be determined with great accuracy and precision, without damaging the underlying substrate and without requiring specific sample preparation. In other words, the method can be carried out on a finished product as it will be used in practice. On the basis of the preliminary scratch test, the operator, or control software, can easily identify insufficient perpendicularity of the surface of the sample with respect to the indentation axis, and correct for it manually or automatically, and the alignment of the wedge blade indenter, with its apex being simply perpendicular to the indentation axis and to the scratch direction, is simply attained, requiring no precise adjustment.

Indeed, it should be noted that two or more preliminary scratch tests may be carried out if required, and furthermore two or more main scratch tests may be carried out under different load profiles on different areas of the sample surface, in order to permit characterisation of adhesion between different sublayers of the coating, when this latter is a multilayer, which may be particularly advantageous if a single main scratch test does not provide enough detailed data.

Advantageously, said wedge blade indenter has a radius less than 1 µm at its apex, which permits investigating the delamination of extremely thin coatings and their sublayers.

Advantageously, said wedge blade has a length dimension of between 5 and 100 µm, preferably between 10 and 30 µm and an apex angle between 45° and 90°, preferably between 60° and 80°. The apex is typically symmetrical, but this does not have to be the case.

These dimensions are particularly adapted for carrying out measurements at nanometer resolution.

Advantageously, insufficient to cause said ductile metallic coating to separate from said brittle substrate, and/or said second load is sufficient to cause said ductile metallic coating to delaminate, either one sublayer delaminating from another, or the entire coating separating from said brittle substrate.

Advantageously, said observation is carried out with a microscope adapted to save images of said scratch. This microscope may be integrated with a headstock supporting the wedge blade indenter, or may be separate.

Advantageously, said ductile metallic coating is a multilayer ductile metallic coating comprising a plurality of ductile metallic layers, the method of the invention permitting to differentiate the adhesion between the sublayers of the multilayer.

Advantageously, said main scratch test is carried out for a distance less than 1 mm.

Advantageously, said ductile metallic coating has a thickness in the range 10 to 1000 nm. Advantageously, said ductile metallic coating has a thickness in the range 10 to 500 nm.

Advantageously, said ductile metallic coating comprises at least two sub-layers of said at least one metal, each sub-layer having a thickness in the range 10 to 200 nm.

### Brief description of the drawings

Further details of the invention will become more apparent upon reading the following description, in reference to the appended figures in which:
- Figure 1 is a schematic lateral view of an indentation testing apparatus with which the method of the invention can be carried out;
- Figure 2 is a schematic lateral cross-sectional view of a sample for testing according to the method of the invention;
- Figure 3 is a schematic isometric wireframe view of a wedge blade indenter for use in the method according to the invention;
- Figures 4a, 4b and 4c are images of observed scratches;
- Figure 5 is a schematic block diagram of the method of the invention; and
- Figure 6a-e are images of observed scratches following the method of the invention, with three preliminary scratch tests and two main scratch tests.

### Embodiments of the Invention

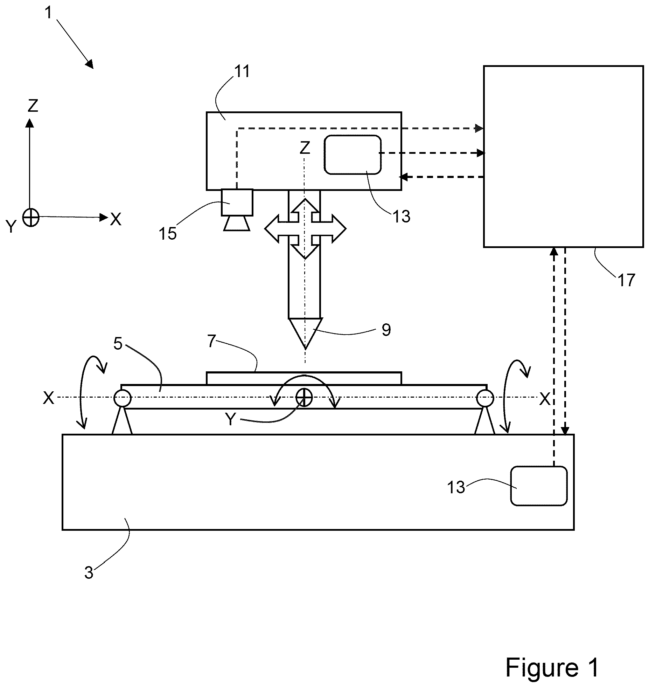

Figure 1 illustrates schematically an indentation testing apparatus 1 with which the method of the invention can be carried out.

Apparatus 1 comprises a base 3, which may be fixed or movable, in which case it is provided with actuators in order to permit movement parallel to one or more axes X, Y, Z as is generally known, said actuators being manual or motor driven.

Upon base 3 is provided a sample holder stage 5, which is adapted to hold a sample by any convenient arrangement (glueing, clamping, bolting, vacuum chuck, etc.) facing an indenter 9, as is generally known. Sample holder stage 5 is adapted to be able to tilt the sample 7 around two perpendicular axes X, Y, which are mutually perpendicular and are perpendicular to an indentation direction Z, said axes X and Y intersecting so as to avoid parasitic displacements and interdependence It is advantageous that the X axis of tilt is parallel to the scratch direction since this simplifies tilt adjustments, but this does not strictly have to be the case. This sample holder stage 5 has been represented in a highly schematic fashion, and many variants are known in the art. Actuation of the tilt about axes X and Y can be carried out by actuators (not illustrated) of any convenient type, such as screw actuators, piezoelectric actuators etc., and may be controlled manually or electrically. In practice, manually-commanded screw actuators without motor drive have proven to give excellent results, since these traditional actuators are analogue and permit the operator exceedingly fine control of the angle of the surface of the sample 7.

Indenter 9 is mounted on a headstock 11 as is generally known, such that relative movement between the indenter 9 and the sample 7 can be carried out at least parallel to the X, Y and Z axes, by either moving the indenter 9 with respect to the sample, and/or or moving the sample holder stage 5 with respect to the indenter 9. Headstock 11 is mounted to a frame (not illustrated) as is generally known.

The headstock 11 and/or the base 3 supports a suite of sensors 13, adapted to measure force applied by the indenter 9 to the sample 7 at least parallel to the Z and X axes and displacement parallel to the Z and X axes, as is generally known, the indentation direction being parallel to the Z axis and the scratch direction being parallel to the X axis. Further optional sensors may include audio sensors, a force sensor adapted to measure force applied by the indenter 9 to the sample 7 parallel to the Y axis, and any other known types of sensor (e.g. friction force, etc).

Furthermore, in order to image the sample surface, notably after a scratch test has been carried out, a microscope with digital camera 15 is provided. In the illustrated embodiment, this is mounted on or in the headstock 11, however this may be separate rather than integrated with the headstock 11.

A processing unit 17, which may be a general purpose computer or a specific device, receives signals from the sensors 13 and the digital camera 15 (as indicated by the dashed arrows), and also controls the relative movement between the indenter 9 and the sample 7 as is generally known (as illustrated schematically by the dashed arrows leading from the processing unit to the headstock 11 and the base 3, to command motorised actuators provided therein as is generally known).

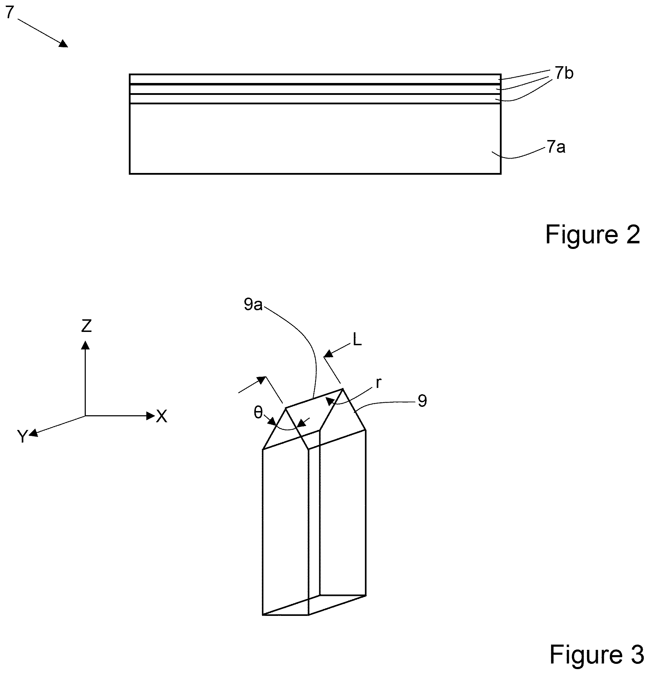

The method of the invention relates specifically to scratch tests carried out with a wedge blade indenter on specific types of sample 7, which is illustrated schematically in figure 2.

Sample 7 comprises a substrate 7a, of relatively hard, brittle material, i.e. a material which has substantially no plastic deformation domain, or indeed no plastic deformation domain at all. Typical examples are material with Vickers hardness of higher than 600 HV like silicon (of any type of crystallinity), gallium arsenide, gallium antimonide, glass, ceramics, glass-ceramics, silicon oxide, silicon nitride, silicon carbide, tantalum oxide, titanium oxide, and zirconium oxide, alumina or similar.

A surface of said substrate 7a is provided with a coating comprising at least one ductile metallic layer 7b, here illustrated as a three-sublayer multilayer. Examples of such materials include gold, copper, silver, platinum, palladium and their alloys, and for the purposes of the present invention, "ductile" is defined as having a maximum ultimate tensile strength of 250 MPa and maximum elastic modulus of 180 GPa.

In the case of a multilayer 7b, the materials may be the same or different, each fulfilling the requirement of ductility.

Total thickness of the at least one ductile metallic layer 7b is typically between 10 nm and 1000 nm, preferably between 10 nm and 500 nm, although thicker layers can also be tested.

As noted above, investigating such materials for determining the critical forces for delamination in very thin ductile metallic layers on brittle substrates has proven difficult.

Figure 3 illustrates schematically an indenter 9 for use in the method of the invention.

Indenter 9 has a wedge blade shaped extremity, of triangular-cross-section prismatic form, its apex 9a having a radius r which typically in the range of 0.5 µm to 2 µm, preferably 1 µm. The length L of the apex 9a is between 5 µm and 100 µm, and the intender 9 is positioned in the apparatus 1 such that apex 9a extends perpendicular to the indentation direction Z and to the scratch direction X, i.e. in the Y direction in the XY plane in the embodiment illustrated.

Length L is smaller than the width of the coating 7b considered perpendicular to the scratch direction X, with the width of the coating being at least twice L, typically very many times L. As a result, the indenter 9 is sufficiently far away from the edge of the coating 7b that it is unaffected by any edge effects, which the opposite arrangement to US5696327. As a result, the method of the invention does not require any special sample preparation, as it can be carried out on the finished product rather than requiring narrow samples with a width less than L to be specially prepared.

The apex 9a is typically also symmetrical when considered with respect to the YZ plane, and has an apex angle of 90° or less, typically 75°. However, other, asymmetrical apexes 9a are also possible. The indenter 9 is typically made of diamond but can be made of tungsten carbide or other hard materials, provided that it is at least one order of magnitude harder than the substrate 7a.

The above-mentioned dimensions of the wedge blade indenter 9 are particularly advantageous for the methodology for two reasons. First, an apex angle θ of 90° or less causes a sharp penetration the ductile metallic layer and thus allows more precise determination of the critical point, which is not achieved with a dull indenter (apex angle greater than 90°) or a spherical indenter, which hence give less precise results. Second, the indenter apex length L is small enough to evenly penetrate through the coating 7b. An indenter 9 with apex 9a which is too long (L > 100 µm) risks having too large vertical differences between the layer's surface and the apex 9a thus causing irregular scratch width leading to difficult determination of the critical point.

Due to the extremely thin nature of the ductile metallic coatings 7b which are to be tested by the method of the invention and the extremely small radius r of the apex 9a of the wedge blade indenter 9, the perpendicularity of the surface of the coating 7b with respect to the indentation direction Z is significantly more important than in the methods of the prior art mentioned above, in order to assure that the apex 9a of the wedge blade indenter 9 penetrates substantially evenly into the coating 7b for the entire length of the scratch produced in the scratch test.

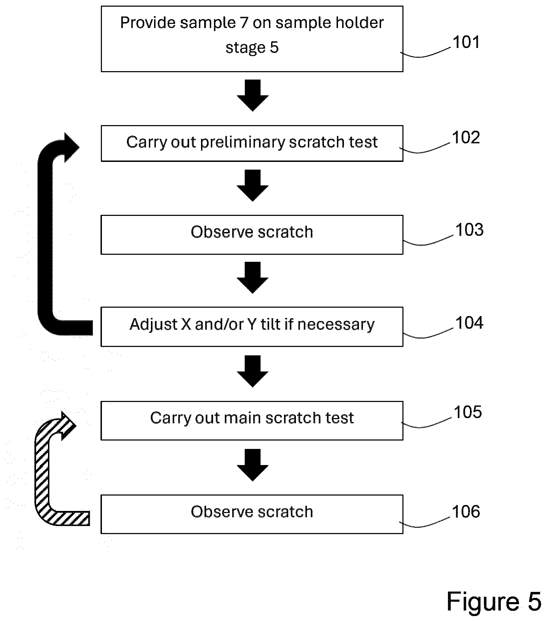

In order to overcome this issue, the method of the invention is illustrated in figure 5, and contains the following steps:

Firstly, in step 101, a sample 7 is positioned on the sample stage 5, with its coating 7b facing the indenter, the surface of the sample 7 being substantially perpendicular to the indentation direction Z.

In step 102, a preliminary scratch test under a first load, which is lower than the load applied between the indenter 9 and the sample 7 in a main test as described below.

Scratch tests are well known in general to the skilled person, but for the avoidance of doubt, the apex 9a of the indenter 9 is brought into contact with the surface of the sample 7 and a load is applied between the indenter 9 and the sample 7 in the indentation direction Z while translating the sample 7 relative to the indenter 9 (by either moving the sample holder stage 5 or the indenter 9) perpendicular to the extension of the apex 9a, i.e. this relative translation is in the X direction. The load applied may be constant, increasing, otherwise varying, as is generally known in the art, and is typically monotonically increasing. During the scratch test, data on the force in the X and Z directions, as well as relative displacement in the X and Z directions, as well as any other data for which sensors 13 are provided, are obtained. In the present nonlimiting example, the length L of the apex 9a of the indenter 9 was 20 µm, and the length of the preliminary scratch test was 0.5 mm at a speed of 1 mm/min, with the first load increasing monotonically from 2m N to 30 mN at a loading rate of 56 mN/min.

For instance, the first load may be predetermined to be insufficient to delaminate any part of the coating 7b

The resulting scratch is observed in step 103 by being imaged with the digital camera 15, for instance using the "Panorama" methodology described in EP20659695, with correlation between the data measured and the image of the scratch, or any other suitable methodology.

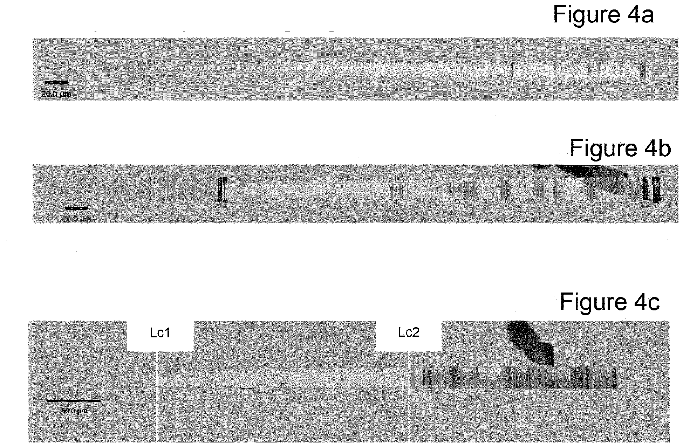

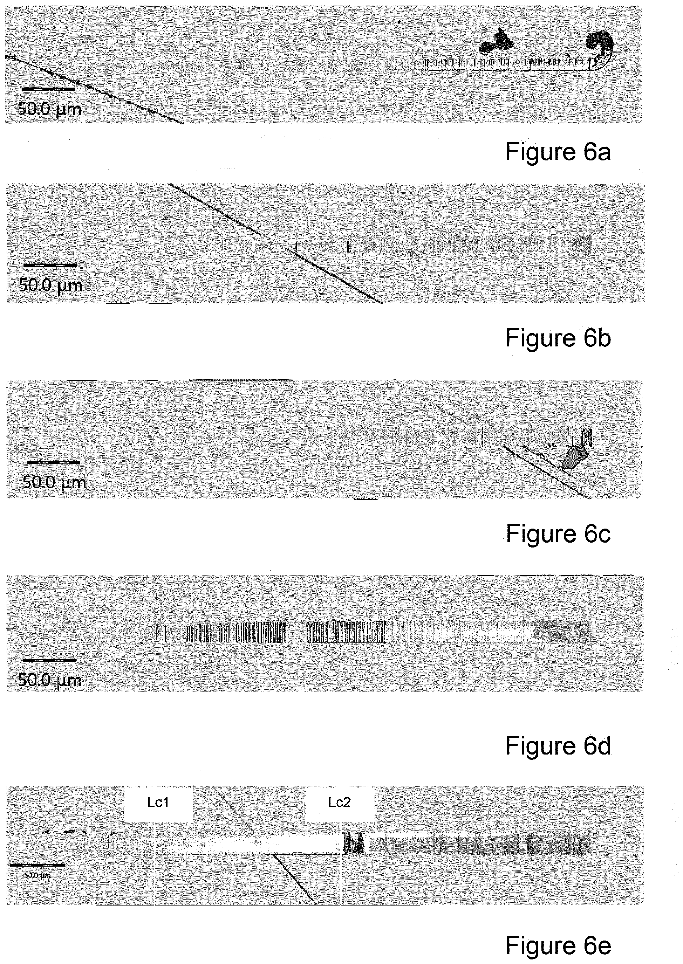

An example of a scratch formed by a scratch test where the perpendicularity is inadequate is shown in figure 4a, without correlation of the data being shown. In this case, the substrate 7a was a GaAs wafer, and coating 7b was a two-layer multilayer of 30 nm thick platinum followed by 70 nm thick gold deposited in that order on the substrate 7a. The load applied was increased monotonically, and as can be seen, the scratch is deeper towards the top of figure 4a, exposing and damaging the substrate without achieving full delamination, indicating that the perpendicularity is insufficient considered at least about the X axis since the apex 9a of the wedge blade indenter 9 is not penetrating evenly and equally into the coating 7b. A preliminary scratch test under the first load and with insufficient perpendicularity will look similar but shallower, as will be shown in the context of figure 6a, described below.

If required, in step 104 the sample is tilted by the operator or automatically by the processing unit 17 about one or both of axes X and/or Y so as to improve its perpendicularity with the indentation direction Z. This can be carried out either manually based on the images of the observation of the scratch, or automatically via automated image analysis and/or analysis of the signals provided by the sensors 13. The tolerance of the perpendicularity will depend on the thickness of the coating 7b, and will typically be under 0.5 degree (0.5°).

If desired, another preliminary scratch test may be carried out on a fresh, undamaged area of the coating 7b.

Once the operator and/or the processing unit 17 is satisfied that the perpendicularity of the surface of the sample 7 and the indentation direction 7, whether a tilt adjustment was made or not, a main scratch test is carried out in step 105 as before, either on a fresh, undamaged portion of the surface of the sample 9 or on top of the preliminary scratch, and with application of a second load between the indenter 7 and the sample 7, said second load being greater than said first load at equivalent points on the scratch. In this case, the second load increased monotonically from 0.5 mN to 80 mN at a loading rate of 159 mN/min, again for a scratch length of 0.5 mm at a speed of 1 mm/min. However, other loading rates, scratch lengths etc. are possible.

Then, in step 106 the scratch resulting from the main scratch test of step 105 is observed, as discussed previously.

An optional second scan (a so-called "post-scan") with the indenter 9 can also be carried out as described in EP1092142 if desired.

It is also possible to carry out a further main scratch test on an undamaged area of the sample 7, for instance under a different load profile than the first main scratch test, which may help in correctly characterising the adhesion of multiple sublayers of the coating 7b if one single main scratch test is insufficient. This option is indicated schematically by the cross-hatched arrow on figure 5.

Examples of observed scratches resulting from the main scratch test of step 105 as described above are given in figure 4b and 4c, with the critical points Lc1 and Lc2 indicated. Lc1 is the point at which the upper gold layer of the coating 7b starts to delaminate from the platinum layer thereof, and Lc2 is the point at which the platinum layer starts to delaminate from the substrate 7a. The critical points where delamination occurs can be determined from the measured data obtained from the various sensors 13, as is generally known, for instance as described in EP2291635, EP3267177 or EP3267176.

As can be seen, the coating 7b delaminates uniformly along the length of the wedge blade indenter 9, and the substrate 7a is undamaged.

Generally, the main scratch test is carried out for a maximum distance of 1 mm, further preferably between 0.5 mm and 0.75 mm, with a speed of 1 to 2 mm/min with a load of between 0.5 and 100 mN at a loading rate of maximum 200 mN/min.

The preliminary scratch test, on the other hand, typically has parameters such as a scratch length of 0.5 mm, a speed of 1 mm/min, with a load of between 0.5 and 10 mN, and a loading rate of 19 mN/min..

Figures 6a-6d illustrate a further specific example of the method of the invention being carried out on a sample 7 of the same type as described above in the context of figures 4a and 4b. The wedge blade indenter has a length L of 20 µm

Figure 6a illustrates the results of a preliminary scratch test carried out with a loading parallel to the indentation axis Z which rises monotonically from 0.5 mN to 10 mN at a loading rate of 19 mN/min over a scratch length of 0.5 mm at a speed of 1 mm/min. As can be seen, the perpendicularity of the scratch is inadequate, with the scratch being deeper towards the bottom of the panorama image, indicating that a tilt adjustment is required

Figure 6b shows the results of a second preliminary scratch test carried out on a fresh area of sample 7 after the aforementioned adjustment, carried out under the same test conditions. The scratch is now sufficiently even considered in the top-to-bottom direction, i.e. the apex 9a length L is sufficiently perpendicular to the sample 7 surface. However, adjustment is still required about an axis perpendicular to both the indentation direction Z and to the scratch direction X.

Figure 6c shows the results of a third preliminary scratch test carried out on a fresh area of sample 7 after the aforementioned adjustment, carried out under the same test conditions. On the basis of this image, the operator concluded that the perpendicularity of the surface of the sample 9 with the indentation direction Z was adequate, and no further tilt adjustment was carried out.

Figure 6d shows the results of a first main scratch test carried out on a fresh area of sample 7 under a load which rose monotonically from 0.5 mN to 20 mN at a loading rate of 39 mN/min over a scratch length of 0.5 mm at a speed of 1000 mm/min. This scratch test was under sufficient load to cause the outer gold sublayer to separate from the underlying platinum sublayer, but not to fully separate the coating 7b from the substrate 7a.

As a result, a further main scratch test was carried out on a fresh area of sample 7 under a load which rose monotonically from 0.5 mN to 80 mN at a loading rate of 159 mN/min over a scratch length of 0.5 mm at a speed of 1000 mm/min. As can be clearly seen, at critical point Lc1, the gold sublayer separates from the underlying platinum sublayer, and at critical point Lc2, the entirety of the coating 7b has separated from the substrate 7a.

Although the invention has been described in terms of specific embodiments, variations thereto are possible without departing from the scope of the invention as defined in the appended claims.

## Claims

1. Method of carrying out a scratch test on a ductile metallic coating (7b) provided on a brittle substrate (7a) of a sample (7), said comprising the steps of:
- positioning a sample (7) on a sample stage (5) facing a wedge blade indenter (9) having a length dimension (L) perpendicular to an indentation axis (Z) which is less than a width of said ductile metallic coating (7b) considered perpendicular to a scratch direction (X), wherein said sample stage (5) is arranged to tilt about two mutually perpendicular axes of rotation which are each substantially perpendicular to said indentation axis (X), and wherein said ductile metallic coating (7b) is positioned so as to be substantially perpendicular to said indentation axis (Z);
- carrying out a preliminary scratch test on said sample (7) with said wedge blade indenter (9) under a first load applied to said sample parallel to said indentation axis (Z), said preliminary scratch test being carried out by relatively displacing said wedge blade indenter (9) with respect to said sample (7) in a scratch direction perpendicular to said length dimension (L) of said wedge blade indenter (9);
- observing the scratch thereby produced;
- if necessary, correcting the tilt of said sample stage (5) such that said ductile metallic coating (7b) is perpendicular to said indentation axis (Z);
- carrying out at least one main scratch test under a second load which is greater than said first load, while recording parameters relating to forces applied between said wedge blade indenter (9) and said sample (7) and to relative displacement of said wedge blade indenter (9) with respect to said sample (7);
- observing the scratch thereby produced and correlating said parameters with the observed scratch .

2. Method according to the preceding claim, wherein said wedge blade indenter (9) has a radius between 0.5 µm and 2 µm at its apex (9a).

3. Method according to any preceding claim, wherein said wedge blade indenter (9) has a length dimension of said apex (9a) between 5 µm and 100 µm , preferably between 10 and 30 µm, and an apex angle between 45° and 90°, preferably between 60° and 80°.

4. Method according to any preceding claim, wherein said first load is insufficient to cause said ductile metallic coating (7b) to separate from said brittle substrate (7a).

5. Method according to any preceding claim, wherein said second load is sufficient to cause said ductile metallic coating (7b) to delaminate.

6. Method according to the preceding claim, wherein said second load is sufficient to cause said ductile metallic coating (7b) to separate from said brittle substrate (7a).

7. Method according to any preceding claim, wherein said observation is carried out with a microscope (15) adapted to save images of said scratch.

8. Method according to any preceding claim, wherein said ductile metallic coating (7b) is a multilayer ductile metallic coating comprising a plurality of ductile metallic layers.

9. Method according to any preceding claim, wherein said main scratch test is carried out for a distance less than 1 mm.

10. Method according to any preceding claim, wherein said brittle substrate (7a) has a Vickers hardness greater than 600 HV.

11. Method according to the preceding claim, wherein said brittle substrate (7a) is chosen from: gallium arsenide, gallium antimonide, silicon, glass, ceramics, glass-ceramics, silicon oxide, silicon nitride, silicon carbide, titanium oxide, tantalum oxide, alumina.

12. Method according to any preceding claim, wherein said ductile metallic coating (7b) has a maximum ultimate tensile strength of 250 MPa and a maximum elastic modulus of 180 GPa.

13. Method according to the preceding claim, wherein said ductile metallic coating (7b) comprises at least one layer of at least one metal chosen from gold, copper, palladium, silver, platinum and their alloys.

14. Method according to the preceding claim, wherein said ductile metallic coating (7b) has a thickness in the range 10 nm to 1000 nm, preferably in the range 10 nm to 500 nm.

15. Method according to claim 11, wherein said ductile metallic coating (7b) comprises at least two sub-layers of said at least one metal, each sub-layer having a thickness in the range 10 nm to 200 nm.
